# EUROPÄISCHE PATENTSCHRIFT

(11) **EP 2 676 756 B1**
(45) Veröffentlichungstag und Bekanntmachung des Hinweises auf die Patenterteilung: **16.08.2017**
(21) Anmeldenummer: 13150512.5
(22) Anmeldetag: 08.01.2013
(51) Int. Cl.: B23B 31/16, B23B 31/12

(54) **Kraftspannfutter**
Power collet chuck
Mandrin de puissance

(30) Priorität: 20.06.2012 EP 12172692
(43) Veröffentlichungstag der Anmeldung: 25.12.2013
(73) Patentinhaber: SMW-AUTOBLOK Spannsysteme GmbH, 88074 Meckenbeuren (DE)
(72) Erfinder: Helm, Peter, D-88074 Meckenbeuren (DE); Deininger, Harald, D-88048 Friedrichshafen (DE)
(74) Vertreter: Engelhardt & Engelhardt

(56) Entgegenhaltungen:
- EP-A1- 1 407 845
- EP-A1- 1 642 662
- DE-A1-102006 027 988

## Beschreibung

Die Erfindung bezieht sich auf ein Kraftspannfutter zur Abstützung von zylinderförmigen Werkstücken, die mittels einer Werkzeugmaschine im Bereich der freien Enden zu bearbeiten sind, gemäß des Oberbegriffes von Patentanspruch 1.

Solche Kraftspannfutter werden von der Patentanmelderin seit Jahrzehnten erfolgreich unter der Kennzeichnung Big Bore^{®} gefertigt und im Markt platziert. Diese Kraftspannfutter weisen eine sich in Längsachse des Kraftspannfutters erstreckende Durchgangsöffnung zur Aufnahme des zu bearbeitenden Werkstückes auf.

Um das zylinderförmige Werkstück möglichst exakt zentrisch zur Längsachse des Spannfutters zu positionieren, sind in dem Futterkörper des Spannfutters drei Zentrierbacken vorgesehen, die in Umfangsrichtung des Werkstückes jeweils in einem Abstand von 120° angeordnet sind und die synchron mit Hilfe eines Antriebskolbens in Richtung des Werkstückes zugestellt sind, so dass die Zentrierbacken gleichzeitig in Wirkkontakt mit dem Werkstück treten bzw. die Position des Werkstückes derart verändern, dass dieses nach dem die Zentrierbacken vollständig zugestellt sind, exakt zentrisch zu der Längsachse des Kraftspannfutter ausgerichtet ist.

Zu diesem Zweck sind die drei Zentrierbacken in einer Führungsnut radial verschiebbar gelagert, denn die axiale Zustellbewegung des Antriebsmittels in Form einer Kolbenstange wird mit Hilfe einer Keilstange umgelenkt, wenn die axiale Zustellbewegung beendet ist. Folglich entsteht eine axiale Zustellbewegung der Kolbenstange auf die Keilstange, und zwar möglichst in dem Bereich des freien Endes des zu bearbeitenden Werkstückes, um dieses im Raum zentrisch zur Längsachse zu fixieren, da in diesem Bereich eine Bearbeitung des Werkstückes erfolgt. Anschließend rutschen die Zentrierbacken auf der Keilstange in radialer Richtung ab und treten in Wirkkontakt mit dem Werkstück.

Nachdem das Werkstück mit Hilfe der drei Zentrierbacken zentrisch positioniert ist, werden drei in dem Spannfutter eingesetzte Spannbacken in Richtung des Werkstückes zugestellt, die zwischen den Zentrierbacken in dem Spannfutter angeordnet sind. Sobald die Spannbacken das positionierte Werkstück umgreifen, können die Zentrierbacken von dem Werkstück gelöst werden, um dieses zur Bearbeitung freizugeben. Solange die Zentrierbacken nämlich auf das Werkstück einwirken, ist dieses zur Bearbeitung nicht zugänglich. Die Spannbacken verlaufen daher in einer Ebene, die zu der von den Zentrierbacken gebildeten Ebene beabstandet ist.

Aus der EP 1 407 845 A und der EP 1 642 662 A1 sind zwar derartige Kraftspannfutter zu entnehmen, allerdings bauen diese Kraftspannfutter nachteiligerweise enorm groß, denn es ist eine ungünstige Verbindung zwischen einem Antriebsmittel und den Spannbacken der Kraftspannfutter vorgesehen. Diese Verbindungsbereiche benötigen einen erheblichen Platzbedarf und zudem ist die Relativbewegung, die bei der linearen Zustellung des Antriebsmittels umzuwandeln ist, auf die schräg zuzustellenden Spannbacken nicht vorteilhaft gelöst..

Solche Kraftspannfutter haben sich in der Praxis zwar bewährt; es hat sich jedoch nachteiligerweise herausgestellt, dass für unterschiedlich groß bemessene Durchmesser der Werkstücke ein Austausch der Zentrierbacken oder des gesamten Kraftspannfutters vorzunehmen ist, denn der axiale Zustellweg sowie die radiale Bewegung der Zentrierbacken über die schiefe Ebene der Keilstange ist derart auszuwählen, dass die Zentrierbacken möglichst nahe an dem freien Ende des zu bearbeiten den Werkstückes in Wirkkontakt mit diesem gelangen. Solche Umrüstmaßnahmen sind zeit- und damit kostenintensiv, denn dadurch ist die Werkzeugmaschine für die Dauer der Umrüstung still gesetzt.

Ein konstruktiv verändertes Kraftspannfutter ist aus der DE 10 2006 027 988 A1 zu entnehmen, das insgesamt drei radial zustellbare Spannbacken aufweist, die mit dem einzuspannenden Werkstück in Wirkkontakt treten und dieses im Raum zentrieren. Für die Betätigung der Spannbacken sind diese über einen Betätigungsbolzen mit einem Antriebsmittel verbunden. Zu diesem Zweck ist in den Futterkörper eine in Richtung des Werkstückes bzw. der Spannbacken geneigte Führungsnut eingearbeitet, in die derjeweilige Betätigungsbolzen axial verschiebbar gelagert ist.

Aus der DE 3304876 A1 ist ebenfalls ein solches Kraftspannfutter zu entnehmen.

Nachteiligerweise benötigt das Antriebsmittel einen Raum außerhalb des Futterkörpers, da dieses unmittelbar auf den Betätigungsbolzen einwirkt, denn die Kraftübertragung erfolgt auf den Betätigungsbolzen mittels des Antriebsmittels in axialer Richtung. Dabei wird hierbei über ein Zylindergehäuse des Antriebsmittels die Zustellkraft erzeugt, die entlang einer axialen Kolbenstange wirkt. Das Zylindergehäuse weist eine Ausnehmung auf, die radial nach außen angeordnet ist, und zur Aufnahme eines Mitnehmerzapfens dient. Eine solche konstruktive Ausgestaltung vergrößert jedoch den Bauraum des Kraftspannfutters nach außen erheblich. Da jedoch solche Kraftspannfutter oftmals in Werkzeugmaschinen eingebaut werden, deren Raumangebot gering bemessen ist, können solchen ausladenden Kraftspannfutter nicht verwendet werden.

Es ist daher Aufgabe der Erfindung ein Kraftspannfutter der eingangs genannten Gattung zur Verfügung zu stellen, das zum einen einen möglichst gering bemessenen Bauraum in Werkzeugmaschinen benötigt und durch das zum anderen Werkstücke mit einer vorgegebenen Spannkraft zentriert an einer Werkzeugmaschine gehalten sind, ohne dass durch die Spannkraft die Werkstücke beschädigt oder verformt werden.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zwischen dem Antriebsmittel und dem Betätigungsbolzen ein Wälzlager, bestehend beispielsweise aus einer Rolle, oder Gleitlager, angeordnet ist, können die Betätigungskräfte von dem Antriebsmittel auf den Betätigungsbolzen in Längsrichtung des Futterkörpers übertragen werden, denn die axial wirkende Betätigungskraft wird durch das Wälzlager oder das Gleitlager in zwei Kraftkomponenten aufgeteilt, die sowohl in Längsrichtung als auch senkrecht dazu des Futterkörpers verlaufen. Dies wird insbesondere dadurch bewerkstelligt, dass zunächst die Führungsnut, in der der Betätigungsbolzen verschiebbar gelagert ist, zu der Längsachse des Futterkörpers und in Richtung der Zentrierbacken bzw. des einzuspannenden Werkstückes geneigt ist. Zum anderen bewirkt die konstruktive Anordnung des Wälzlagers oder des Gleitlagers eine Relativbewegung senkrecht zu der Längsachse des Futterkörpers zwischen dem Antriebsmittel, das parallel zu der Längsachse des Futterkörpers beweglich ist, und dem Betätigungsbolzen, der sowohl eine parallel zu der Längsachse des Futterkörpers als auch senkrecht dazu verlaufende Bewegung ausführt. Die Anbringung des Wälzlagers oder des Gleitlagers, entweder an dem Antriebsmittel oder an dem Betätigungsbolzen und die vorzusehende Anlagefläche, entweder an dem Antriebsmittel oder an dem Betätigungsbolzen, stellt eine mechanisch gleichwirkende Maßnahme dar.

Zur Erzeugung der Betätigungskraft ist das Antriebsmittel vorteilhafterweise als hydraulisch oder pneumatisch betriebener Kolben ausgestaltet. Die von dem Kolben ausgeübte bzw. erzeugte Betätigungskraft hängt im Wesentlichen von dem Durchmesser des Kolbens und dem Druckzustand des eingefüllten Mediums im Kolbenraum ab. Da diese geometrischen Abmessungen und der Druckzustand während des Betriebes des Antriebsmittels nicht variabel verändert werden können, ist demnach die Betätigungskraft identisch mit der Spannkraft, die auf das Werkstück durch die drei Zentrierbacken einwirkt.

Oftmals ist jedoch diese Zentrierkraft viel zu groß bemessen, wodurch das Werkstück verformt oder zerstört ist. Es ist daher besonders vorteilhaft, wenn die Betätigungskraft während der Zustellung der drei Zentrierbacken verringert wird, um eine geringere Zentrierkraft, die von den Zentrierbacken auf das Werkstück übertragen wird, zur Verfügung zu stellen. Zu diesem Zweck ist das Antriebsmittel aus zwei teleskopartig ineinander gelagerten Zustell- und Spannkolben gebildet.

Der Zustellkolben weist eine wesentlich größer bemessene Oberfläche, die dem Druckraum zugewandt ist, auf als der Spannkolben, der zudem in dem Zustellkolben gelagert ist. Die axiale Hubbewegung des Zustellkolbens wird mittels einer an dem Futterkörper angearbeiteten Anschlagsfläche begrenzt, so dass der Hubweg des Spannkolbens in einem exakt vorgegebenen Raum stattfindet.

Darüberhinaus ermöglicht die hohe an dem Zustellkolben anliegende Betätigungskraft eine rasche Zustellung bzw. Bewegung der drei Zentrierbacken. Erst wenn die Bewegung des Zustellkolbens durch die Anschlagsfläche des Futterkörpers gestoppt ist, erfolgt mittels des Spannkolbens die weitere Bewegung der Zentrierbacken radial in Richtung auf das einzuspannende Werkstück.

Somit kann mit einem identischen Druckzustand sowohl die rasche Zustellung als auch die exakt notwendige Zentrierkraft der Zentrierbacken erzielt werden.

Sollte festgestellt werden, dass die Zentrierkraft, die an den Zentrierbacken anliegt, für das einzuspannende Werkstück zu groß bemessen ist, können weitere konstruktive Maßnahmen zur Verringerung der Oberfläche des Spannkolbens eingesetzt werden. So kann beispielsweise die Oberfläche des Spannkolbens in Form einer Polygonstruktur ausgestaltet sein, um dessen Oberfläche zu reduzieren und/oder in die Oberfläche des Spannkolbens sind Durchgangsöffnungen eingearbeitet, in denen sich der Kontur entsprechende Führungsstangen, die parallel zu der Bewegungsrichtung des Spannkolbens verlaufen, lageorientiert angebracht sind. Diese Führungsstangen und ihre entsprechenden Durchgangsöffnungen können dabei einen runden oder einen nierenförmigen gebogenen Querschnitt aufweisen.. Der Spannkolben gleitet demnach entlang der Führungsstangen.

Es ist besonders vorteilhaft, wenn der Betätigungsbolzen in einer Stabilisierungshülse teilweise verschiebbar zu dieser gelagert ist, die sich an der Innenwand der Führungsbohrung abstützt und teilweise die Bewegung des Betätigungsbolzen bis zu einem vorgegebenen Anschlag vollzieht, um anschließend stillgesetzt zu sein, so dass eine Relativbewegung zwischen dem Betätigungsbolzen und der Stabilisierungshülse entsteht. Durch die Stabilisierungshülse kann nämlich der Austrittsweg des Betätigungsbolzens aus dem Futterkörper erhöht werden, wodurch die Bewegungsfreiheit des Betätigungsbolzens und damit der Zentrierbacken vergrößert ist. Dies resultiert in dem Ergebnis, dass die Zentrierbacken bezogen auf die Mantelfläche des zu zentrierenden Werkstückes in einem vergrößerten Zentrier-Intervall auf das Werkstück einwirken können, und dass die Positionierung der Zentrierbacken bezogen auf das Werkstück in Abhängigkeit von dem Durchmesser des Werkstückes frei einstellbar sind.

In der Zeichnung ist ein erfindungsgemäßes Kraftspannfutter dargestellt, das unterschiedliche konstruktive Ausgestaltungen aufweist, die beliebig miteinander kombinierbar und die nachfolgend näher erläutert sind. Im Einzelnen zeigt:
- Figur 1: ein Kraftspannfutter mit drei Zentrierbacken und drei Spannbacken, die benachbart zueinander in einem Futterkörper zur Zentrierung bzw. Abstützung eines zylinderförmigen Werkstückes angeordnet sind, in Vorderansicht,
- Figur 2: das Kraftspannfutter gemäß Figur 1 mit zwei teleskopartig ineinander gelagerten Zustell- und Spannkolben im Ausgangszustand und im Schnitt,
- Figur 3a: das Kraftspannfutter gemäß Figur 2, in vergrößerter Darstellung,
- Figur 3b: das Kraftspannfutter gemäß Figur 3a, im Zentrierzustand,
- Figur 4a: das Kraftspannfutter gemäß Figur 2 mit einer in eine Führungsnut und axial verschiebbar gelagerten Stabilisierungshülse, im Ausgangszustand,
- Figur 4b: das Kraftspannfutter gemäß Figur 4a im Spannzustand, jeweils im Schnitt,
- Figur 5a: das Kraftspannfutter gemäß Figur 2 in perspektivischer Ansicht, wobei an dem freien Ende des Antriebsmittels, in Form eines Spannkolbens, ein Wälzlager in Form einer Rolle befestigt ist, die auf einer an dem Betätigungsbolzen angearbeiteten Anlagefläche aufliegt, die in Wirkkontakt mit dem Wälzlager steht,
- Figur 5b: das Kraftspannfutter gemäß Figur 2 in perspektivischer Ansicht, wobei an dem freien Ende des Antriebsmittels, in Form eines Spann- und eines Zustellkolbens, ein Wälzlager in Form einer Rolle befestigt ist, die auf einer an dem Betätigungsbolzen angearbeiteten Anlagefläche aufliegt, die in Wirkkontakt mit dem Wälzlager steht,
- Figur 5c: das Kraftspannfutter gemäß Figur 5b mit einem Spannkolben, der eine verringerte Oberfläche in Form einer Polygonstruktur aufweist,
- Figur 5d: das Kraftspannfutter gemäß Figur 2 in perspektivischer Ansicht, wobei an dem freien Ende des Antriebsmittels in Form eines Spannkolbens eine Anlagefläche angearbeitet ist, auf die ein an einem Betätigungsbolzen montiertes Wälzlager in Form einer Rolle aufliegt,

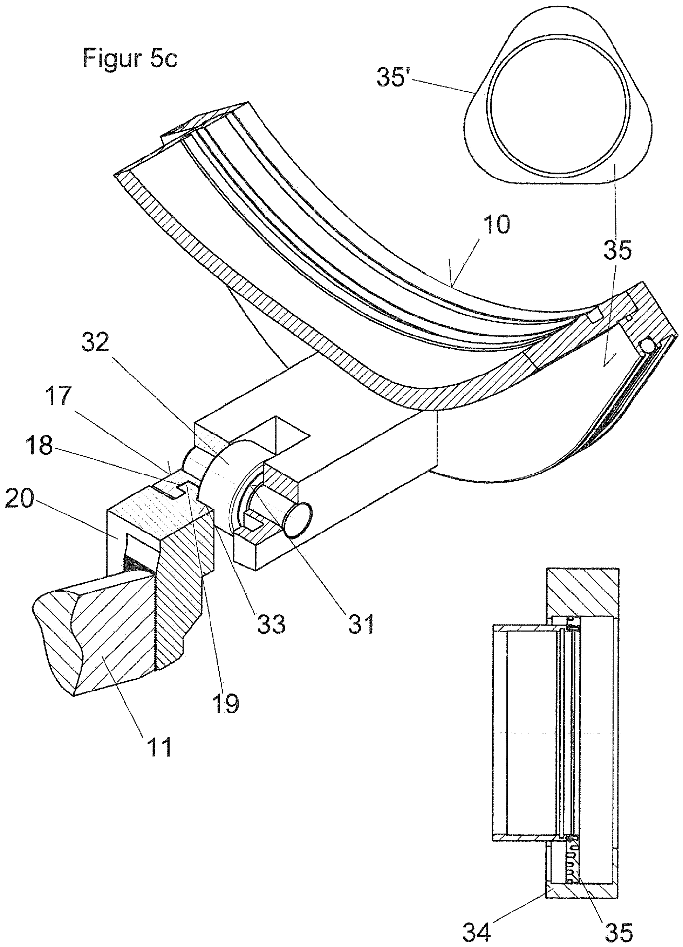

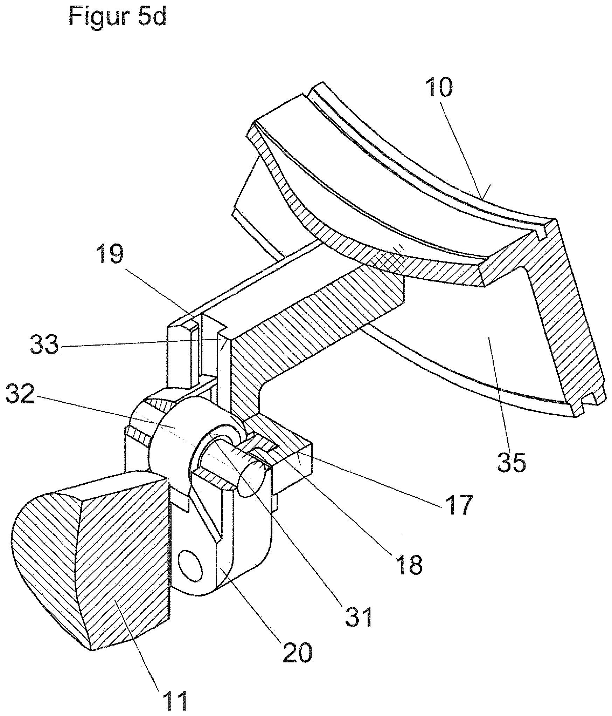

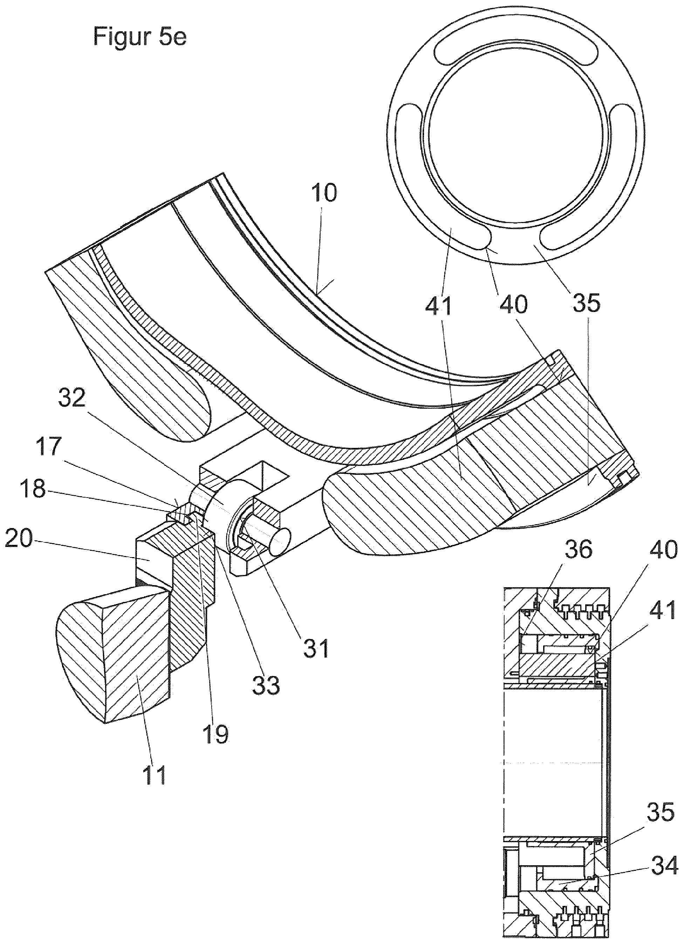

- Figur 5d Figur 5e: das Kraftspannfutter gemäß Figur 5c mit einem Spannkolben, in dessen Oberfläche drei nierenförmig gekrümmte Durchgangsöffnungen eingearbeitet sind, in denen jeweils an der Anlagefläche fixierte Führungsstangen angeordnet sind,.

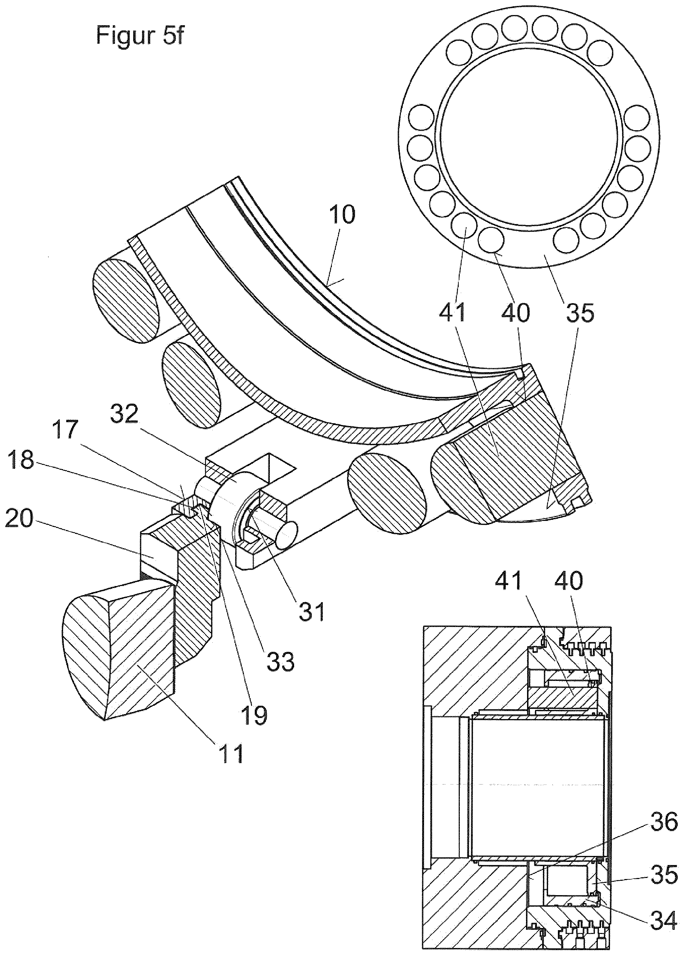

- Figur 5f: das Kraftspannfutter gemäß Figur 5c mit einem Spannkolben, in dessen Oberfläche eine Vielzahl von runden Durchgangsöffnungen eingearbeitet sind, in denen jeweils an der Anlagefläche fixierte Kolbenstangen angeordnet sind.

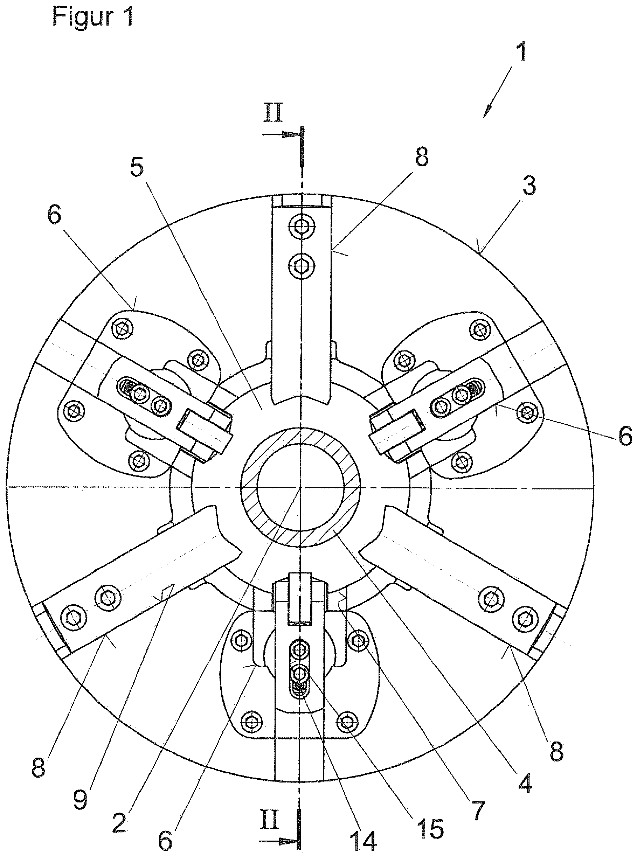

In Figur 1 ist ein Kraftspannfutter 1 zu entnehmen, durch das zylinderförmige Werkstücke 4, während diese von einer Werkzeugmaschine bearbeitet werden, abgestützt sind. Zur Aufnahme des jeweiligen Werkstückes 4 ist in einem Futterkörper 3 des Kraftspannfiutters 1 eine Durchgangsöffnung 5 eingearbeitet, deren Zentrum fluchtend mit der Längsachse 2 des Kraftspannfutters 1 bzw. des Futterkörpers 3 verläuft. Das Werkstück 4 soll insbesondere an deren freien Stirnseiten beispielsweise mit einem Außen- oder Innengewinde versehen werden.

Es ist erforderlich, das Werkstück 4 zunächst in einer zentrischen Position bezogen auf die Längsachse 2 des Futterkörpers 3 zu positionieren, um eine möglichst fehlerfreie Bearbeitung des Werkstückes 4 zu erreichen. Zu diesem Zweck sind in den Futterkörper 3 drei Zentrierbacken 6 eingesetzt, die jeweils in einer in dem Futterkörper 3 eingearbeiteten Führungsnut 7 radial beweglich gelagert sind. Sobald die zentrierte Position des Werkstückes 4 durch die Zustellung der drei Zentrierbacken 6 erreicht ist, werden die drei benachbart zu den Zentrierbacken 6 angeordneten Spannbacken 8 radial in Richtung des einzuspannenden Werkstückes 4 zugestellt. Auch die jeweilige Spannbacke 8 ist in einer in dem Futterkörper 3 eingearbeiteten Führungsnut 9 radial verschiebbar gelagert. Sobald die drei Spannbacken 8 das zentrierte Werkstück 4 umgreifen und halten, können die drei Zentrierbacken 6 in die Ausgangsstellung zurückgefahren werden, um den Bereich des Werkstückes 4 freizugeben, der zu bearbeiten ist.

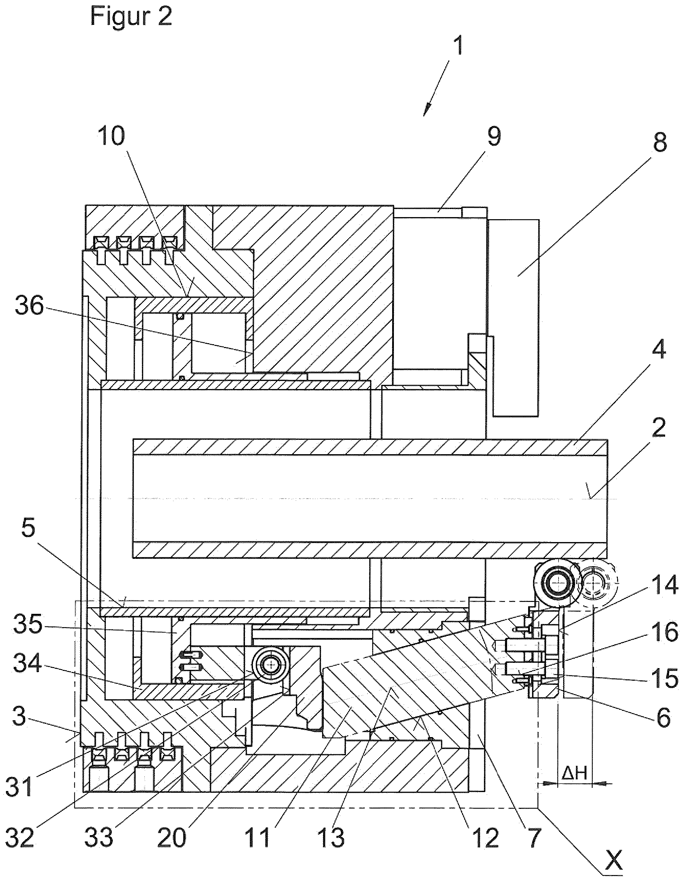

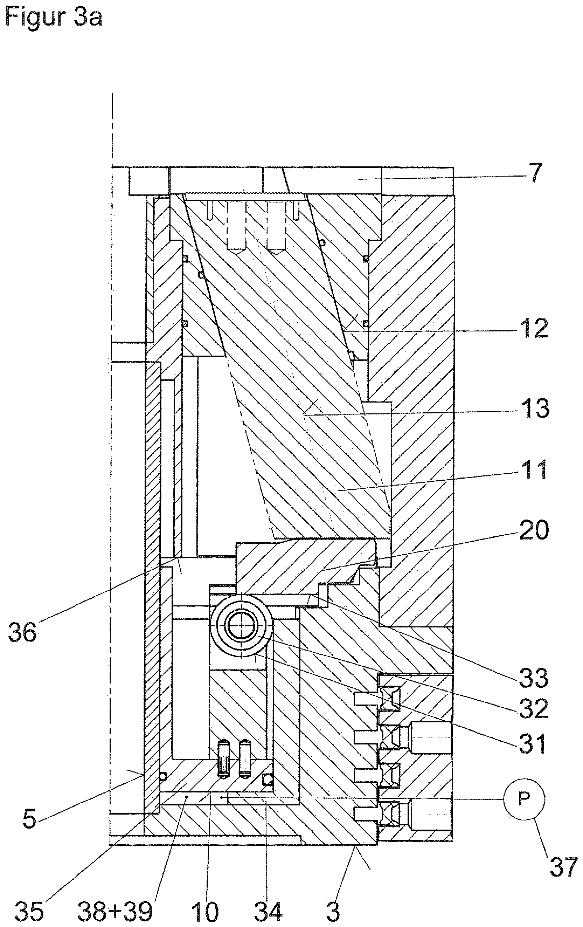

In den Figuren 2 und 3a ist die Ausgangsstellung der Zentrierbacken 6 gezeigt. Die drei Zentrierbacken 6 sind trieblich mit einem Antriebsmittel 10 verbunden, das im Ausführungsbeispiel aus zwei pneumatisch oder hydraulisch betriebenen Zustell- und Spannkolben 33, 34, die in axialer Richtung, also parallel zu der Längsachse 2, verstellbar sind. Dadurch werden die Zentrierbacken 6 synchron betätigt und üben auf das zu zentrierende Werkstück 4 eine gleichmäßige in Umfangsrichtung verteilte Zentrierkraft auf dieses aus, so dass das Werkstück 4 zumindest in der Zentrierebene und benachbart dazu derart positioniert ist, dass die Längsachse des Werkstückes 4 fluchtend zu der Längsachse 2 des Futterkörpers 3 ausgerichtet ist.

Zwischen der jeweiligen Zentrierbacke 6 und dem Antriebsmittel 10 ist zudem ein Betätigungsbolzen 11 als Zwischenglied vorgesehen, der in eine in dem Futterkörper 3 eingearbeitete Führungsbohrung 12 eingesetzt ist. Die Führungsbohrung 12 verläuft dabei geneigt zu der Längsachse 2, und zwar derart, dass der Abstand der Längsachse 13 der Führungsbohrung 12 im Bereich der Zentrierbacken 6 kleiner bemessen ist als der Abstand der Führungsbohrung 12 von der Längsachse 2, die dem Kolben 10 zugewandt ist. Somit sind die drei in dem Futterkörper 3 eingearbeiteten Führungsbohrungen 12 in der Querschnittsebene trichter- oder V-förmig angeordnet. Der Neigungswinkel der Längsachse 13 der jeweiligen Führungsbohrung 12 und der Längsachse 2 beträgt zwischen 20° und 45°.

Der Zustellkolbens 34 ist in einem Druckraum 36 axial verschiebbar gelagert. Über eine Zuleitung 37 wird in den Druckraum 38 ein Medium, beispielsweise ein Gas oder eine Flüssigkeit mittels einer Pumpe eingepresst, so dass dadurch die Oberfläche des Zustellkolbens 34 mit einem Druck beaufschlagt ist. In Abhängigkeit von dem Druckzustand in dem Druckraum 38 und in Abhängigkeit von der Größe der Oberfläche des Zustellkolbens 34 entsteht eine Betätigungskraft F, die auf den Betätigungsbolzen 11 und somit auf die Zentrierbacken 6 einwirkt. Da der Zustellkolben 34 parallel zu der Längsachse 2 des Futterkörpers 3 verläuft, sind keine radial nach außen abstehenden zusätzlichen Anformungen an dem Futterkörper 3 notwendig, so dass die Abmessungen des Futterkörpers 3 unverändert gegenüber anderen Futterkörpern von Kraftspannfuttern beibehalten werden kann.

Um nunmehr die Betätigungskraft F zu reduzieren und zwar auf eine exakt vorgegebene Größe, durch die eine Beschädigung des einzuspannenden Werkstückes 4 zu vermeiden ist, ist in den Zustellkolben 34 ein Spannkolben 35 eingesetzt. Somit sind die Zustellkolben 34 und der Spannkolben 35 teleskopartig ineinander gelagert. Sobald nämlich der Hubweg des Zustellkolbens 34 erreicht ist, liegt der Zustellkoben 34 an einem an dem Futterkörper 3 angeformten Anschlag 36 an, so dass dieser festgesetzt ist. Zwischen dem Zustellkolben 34 und dem Spannkolben 35 ist ein weiterer Druckraum 39 vorgesehen, der mit dem Druckraum 38 über die Zuleitung 37 kommuniziert, so dass in diesen Druckräumen 38 und 39 identischen Druckverhältnisse herrschen. Eine Druckveränderung an der Pumpe oder durch sonstige Reduzierungsmaßnahmen sind somit nicht erforderlich, denn die Oberfläche des Spannkolbens 35 ist im Vergleich mit der Oberfläche des Zustellkolbens 34 wesentlichen kleiner bemessen, so dass die von dem Spannkolben 35 erzeugte Betätigungs- oder Zentrierkraft, die auf die Zentrierbacken 6 über den jeweiligen Betätigungsbolzen 11 wirkt, erheblich verringert ist.

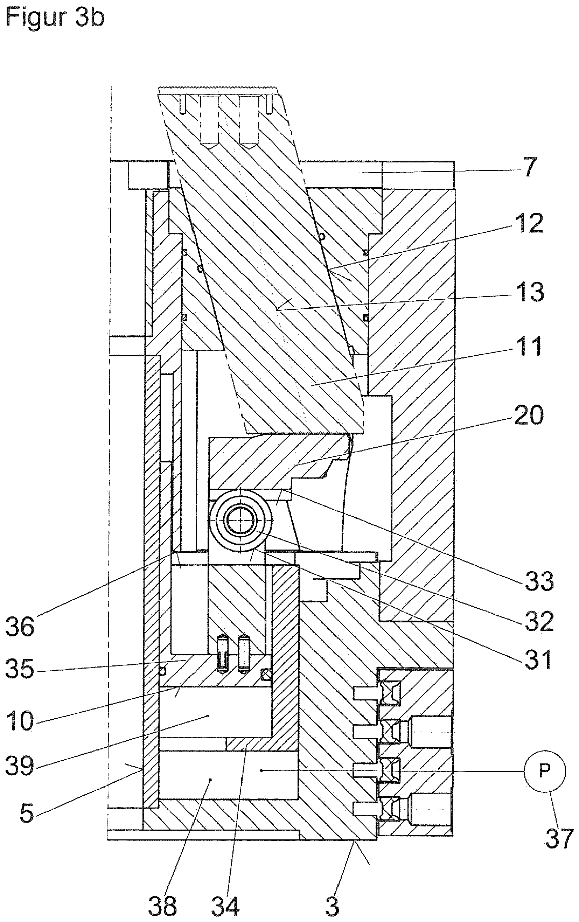

In Figur 3b ist gezeigt, welche Endstellung der Zustellkolben 34 und der Spannkolben 35 einnehmen, wenn der Zentrierzustand erreicht ist. Die Zuleitung 37 kann beispielsweise als Ringkanal oder als durchlässige Dichtung innerhalb des Futterkörpers 3 ausgestaltet sein, durch die das eingepresste Medium in die Druckräume 38 und 39 einströmt bzw. beim Zurückfahren der Betätigungsbolzen 11 aus diesen herausgedrückt ist. Die Zustell- und Spannkolben 34 und 35 können nämlich beidseitig mit dem entsprechenden Medium beaufschlagt werden.

Durch die vorgegebene Geometrie des Spannkolbens 35 und des eingestellten Druckzustandes in den Druckräumen 38 und 39 entsteht eine exakt vorgegebene Betätigungskraft F, die auf die einzuspannenden Werkstücke 4 einwirkt, so dass diese weder verformt noch beschädigt sind.

Aufgrund der größeren Oberflächenabmessung des Zustellkolbens 34 im Vergleich mit dem kleineren Spannkolben 35 ist vorteilhafterweise erreicht, dass ein Eilhub des Antriebsmittels 10 entsteht, denn aufgrund der höheren an dem Zustellkolben 34 vorherrschenden Kraftverhältnissen wird dieser schneller axial bewegt, so dass dadurch auch die Betätigungsbolzen 11 und somit die Zentrierbacken 6 verfahren sind.

Um den Abstand zwischen dem freien Ende der Zentrierbacke 6 und dem zu zentrierenden Werkstück 4 einstellen zu können, ist in die jeweilige Zentrierbacke 6 ein Langloch 14 eingearbeitet, in das Befestigungsschrauben 15 eingesetzt sind, die in einem in dem Betätigungsbolzen 11 eingearbeiteten Gewindebohrungen 16 eingeschraubt sind. Die Länge des jeweiligen Langlochs 14 liegt etwa zwischen einem Drittel und zwei Drittel der Länge der Zentrierbacken 6, so dass in diesem Bereich die Zentrierbacke 6 an dem Betätigungsbolzen 11 variabel positionierbar ist. Mittels des Betätigungsbolzen 11 ist die jeweilige Zentrierbacke 6 geführt gehalten.

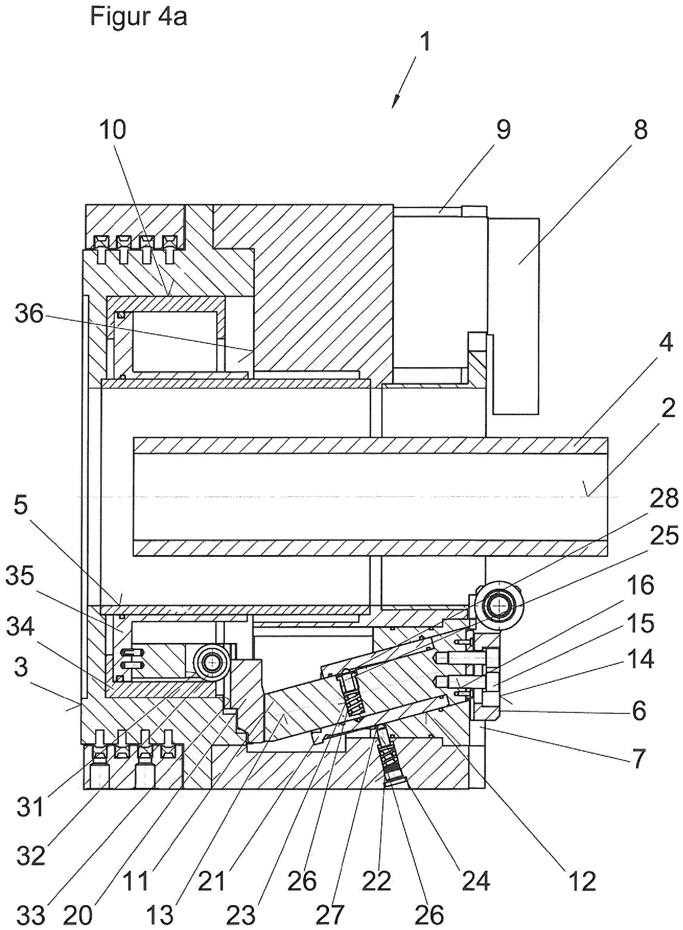

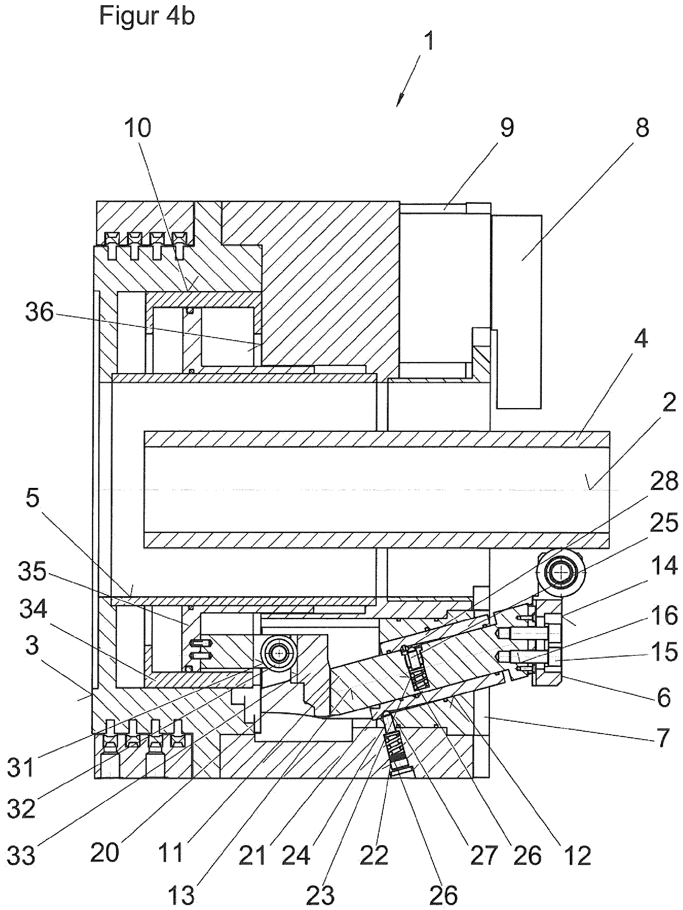

Des Weiteren ist gemäß den Figuren 4a und 4b zwischen dem Betätigungsbolzen 11 und der Innenwand der Führungsbohrung 12 eine Stabilisierungshülse 21 eingesetzt, die dazu dient, den aus dem Futterkörper 3 ausgefahrenen Betätigungsbolzen 11 abzustützen, so dass der Ausfahrweg des Betätigungsbolzen 11 aus dem Futterkörper 3 vergrößert werden kann, da durch die Stabilisierungshülsen 21 im auskragendem Zustand abstützbar sind.

Die Stabilisierungshülse 21 tritt demnach teilweise aus der von dem Futterkörper 3 gebildeten Ebene heraus.

Die Bewegung der Stabilisierungshülse 21 relativ zu dem Futterkörper 3 und dem Betätigungsbolzen 11 ist mittels zweier Raststifte 24 und 25 bewerkstelligt. Der Raststift 24 ist dabei in eine in dem Futterkörper 3 eingearbeitete Bohrung 22 eingesetzt und liegt auf der Oberfläche der Stabilisierungshülse 21 auf. In die Bohrung 22 ist des Weiteren eine Schraubendruckfeder 26 eingesetzt, durch die der Raststift 24 unter Vorspannung in der Bohrung 22 steht.

Gegenüberliegend, jedoch seitlich versetzt zu dem Raststift 24, ist der Raststift 25 in einer in dem Betätigungsbolzen 11 eingearbeiteten Bohrung 23 eingesetzt. Der Raststift 25 wird mittels der Schraubendruckfeder 26 aus dem Betätigungsbolzen 11 auf die Innenmantelfläche der Stabilisierungshülse 21 unter Vorspannung zur Anlage gebracht. In die Innenmantelfläche der Stabilisierungshülse 21 ist eine Kerbe 28 eingearbeitet, in die der Raststift 25 in der Ausgangsposition der Zentrierbacken 6 eingreift, so dass eine form- oder kraftschlüssige Wirkverbindung zwischen dem Raststift 25 und der Stabilisierungshülse 21 vorliegt. Der auf die Außenmantelfläche der Stabilisierungshülse 21 einwirkende Raststift 24 liegt gleitend auf dieser auf, so dass eine auf den Betätigungsbolzen 11 einwirkende axiale Zustellkraft dazu führt, dass der Betätigungsbolzen 11 und die Stabilisierungshülse 21 gleichzeitig verschoben sind. Erst wenn der im Futterkörper 3 eingesetzte Raststift 24 in eine in die Außenmantelfläche der Stabilisierungshülse 21 eingearbeitete Kerbe 27 eintaucht, entsteht dort eine form- oder kraftschlüssige Wirkverbindung zwischen der Stabilisierungshülse 21 und dem Futterkörper 3, die dazu führt, dass die Bewegung der Stabilisierungshülse 21 festgesetzt ist und anschließend eine Relativbewegung zwischen dem Betätigungsbolzen 11 und der Stabilisierungshülse 21 stattfindet, um den Betätigungsbolzen 11 und damit die Zentrierbacke 6 weiter von dem Futterkörper 3 zu entfernen. Die Wirkverbindung zwischen dem Raststift 25 und der Stabilisierungshülse 21 ist dann gelöst, so dass der Raststift 25 auf der Innenmantelfläche der Stabilisierungshülse entlang gleitet.

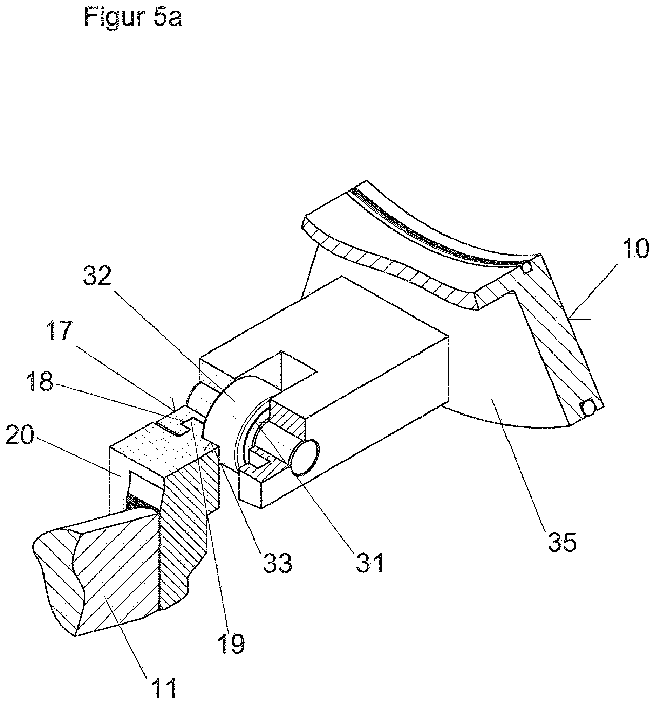

In den Figuren 2 bis 5c ist an ein dem freien Ende des Betätigungsbolzens 11 zugeordneter Übertragungskörper 20 angeschraubt, der jedoch auch mit dem Betätigungsbolzen 11 aus einem gemeinsamen Werkstoff gefertigt werden kann, so dass der Betätigungsbolzen 11 und der Übertragungskörper 20 als einteiliges Bauteil ausgestaltet sind. Der Übertragungskörper 20 weist eine dem Spannkolben 34 des Antriebsmittels 10 zugewandte Anlagefläche 33 auf, die senkrecht zu der Längsachse 2 ausgerichtet ist. Zwischen der Anlagefläche 33 und dem Spannkolben 34 ist ein Wälzlager 31 in Form einer Rolle 32 angeordnet, durch die die axiale Betätigungskraft F des Antriebsmittels 10 auf die Anlagefläche 33 übertragen ist, um gleichzeitig bei der axialen Verstellung des Betätigungsbolzens 11 eine ausgleichende Relativbewegung zwischen der Anlagefläche 33 in der senkrecht zu der Längsachse 2 verlaufende Ebene erfolgen kann, denn die Anlagefläche 33 bewegt sich, wie dies insbesondere in Figur 5a dargestellt ist, während der Zustellbewegung des Antriebsmittels 10 in Richtung der Längsachse 2. Das Wälzlager 31 kann auch als Gleitlager ausgestellt sein.

Des Weiteren ist in Figur 4b zu erkennen, dass der Raststift 25 nunmehr in die Kerbe 27 eintaucht und die Stabilisierungshülse 21 festgesetzt hat. Die Zentrierbacken 6 stehen nunmehr im Wirkkontakt mit dem Werkstück 4 und zentrieren dieses.

Figur 5a ist ferner zu entnehmen, wie die Zentrierbacken 6 aus der zentrierten Position mit Hilfe des Antriebsmittels 10 zurückgezogen werden und wie die Rolle 32 befestigt ist. Zunächst ist zwischen dem freien Ende des Spannkolbens 35 und dem Betätigungsbolzen 11 ein Nutenstein 17 vorgesehen, der gleitend im Inneren des Futterkörpers 3 angeordnet ist. Der Nutenstein 17 weist zwei beabstandet und parallel zueinander verlaufende Führungsöffnungen 18 auf, die vorteilhafterweise im Querschnitt U-förmig ausgestaltet sind. An den Spannkolben 35 und den Betätigungsbolzen 11 ist jeweils eine rechteckförmige Nase 19 angeformt, die in die Führungsöffnungen 18 des Nutensteins 17 axial verschiebbar gelagert sind.

Die Rolle 32 des Wälzlagers 31 ist drehbar in dem Nutenstein 17 angeordnet und liegt auf der Anlagefläche 33 des Betätigungsbolzens 11 bzw. des Übertragungskörpers 20 auf. Sobald nunmehr die Rückstellung des Spannkolbens 35 erfolgt, führt die vorliegende formschlüssige Wirkverbindung zwischen dem Spannkolben 35 und dem Betätigungsbolzen 11 dazu, dass die Rückstellbewegung des Spannkolbens 35 die Rückstellung des Betätigungsbolzens 11 bewirkt.

Sobald die Zentrierbacken 6 an die nach außen abstehende freie Stirnseite der Stabilisierungshülse 21 oder ab den Futterkörper 3 anschlagen, wird auch die Stabilisierungshülse 21 über die Rückstellkraft des Spannkolbens 35 zurückgezogen, so dass sich die Rastverbindung zwischen der Stabilisierungshülse 21 und dem Futterkörper 3 durch den Raststift 24 aufgehoben und die Stabilisierungshülse 21 erneut gemeinsam mit dem Betätigungsbolzen 11 zurückgestellt ist.

Die in Figur 2 dargestellte Ausführungsvariante des Kraftspannfutters 1 geht von dem Erfindungsprinzip aus, dass der Betätigungsbolzen 11 auch unmittelbar in der Führungsbohrung 12 des Futterkörpers 3 relativ zu diesem bewegbar abgestützt werden kann. Die insbesondere in den Figuren 4a und 4b vorgesehene Stabilisierungshülse 21 ist bei dieser Ausführungsvariante nicht erforderlich. Vielmehr gleitet oder rutscht der Betätigungsbolzen 11 unmittelbar im Inneren der Führungsbohrung 12 in Abhängigkeit von der Bewegung des Kolbens 10 hin und her, wie dies bereits vorstehend im Einzelnen erläutert wurde.

Die Begrenzung des Verstellweges des Betätigungsbolzens 11 erfolgt für alle Ausführungsvarianten durch die Begrenzung des axialen Hubweges des Antriebsmittels 10.

In Figur 5d ist die formschlüssige Verbindung zwischen dem Betätigungsbolzen 11 und dem Antriebsmittel 10 mechanisch umgekehrt im Vergleich zu Figur 5a, da bei dieser Ausführungsvariante die Rolle 32 des Wälzlagers 31 an dem Betätigungsbolzen 11, das dem freien Ende des Antriebsmittels 10 zugewandt ist, angebracht ist.. Die Rolle 32 liegt auf einer an dem freien Ende des Antriebsmittels 10 angearbeiteten Anlagefläche 33 auf. Der Nutenstein 17 sowie die an dem Spannkolben 35 und dem Betätigungsbolzen 11 angeformten Nasen 19, greifen, wie bereits beschrieben, in den Nutenstein 17 ein, so dass zwischen dem Betätigungsbolzen 11 und dem Spannkolben 35 die parallel zu der Längsachse 2 verlaufenden Kräfte formschlüssig übertragen sind und gleichzeitig eine senkrecht zu der Längsachse 2 entstehende Relativbewegung ausgeführt werden kann.

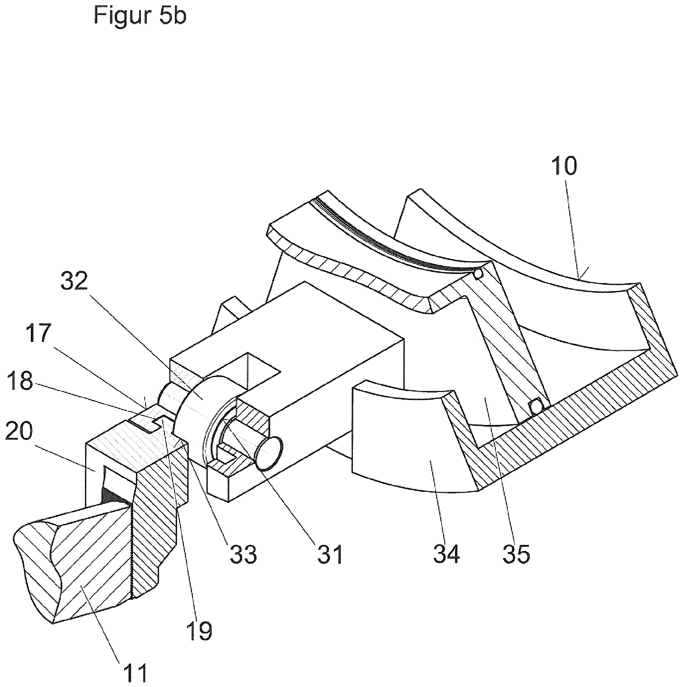

Aus den Figuren 5b und 5c ist darüber hinaus ersichtlich, dass der Spannkolben 35 von dem Zustellkolben 34 vollständig umschlossen ist und somit der Druckraum 39 von dem Zustellkolben 34 gebildet ist.

In Figur 5c ist zu entnehmen, dass die Oberfläche des Spannkolbens 35 mit Hilfe einer Polygonstruktur 35' im Vergleich zu einer runden oder ringförmigen Kontur weiter verkleinert werden kann, so dass dadurch die zu übertragenden Betätigungskräfte F weiter reduziert sind. Die Polygonstruktur des Spannkolbens 35 ist dabei dem Zustellkolben 34 zugewandt und verläuft im Inneren des Druckraumes 39.

In den Figuren 5e und 5f ist gezeigt, dass die Oberfläche des Spannkolbens 35 mit Hilfe von Durchgangsöffnungen 40, die zur Aufnahme jeweils einer Führungsstange 41 in diese eingearbeitet sind, verkleinert ist, so dass die zur Verfügung stehende Oberfläche des Spannkolbens 35 verringert ist. Die Querschnittsform der Durchgangsöffnungen 40 und deren daran angepassten Führungsstange 41 können nierenförmig gekrümmt oder rund ausgestaltet sein. Die jeweilige Führungsstange 41 ist lageorientiert an der Anlagefläche 36 des Futterkörpers 3 befestigt und der Spannkolben 35 bewegt sich relativ zu den festen Führungsstangen 41, die parallel zu dessen Bewegungsrichtung verlaufen.

## Patentansprüche

1. Kraftspannfutter (1) zur Abstützung von zylinderförmigen Werkstücken (4), die mittels einer Werkzeugmaschine im Bereich der freien Enden zu bearbeiten sind, bestehend aus
- einem Futterkörper (3), in dem in dessen Längsachse (2) eine Durchgangsöffnung (5) zur Aufnahme des Werkstückes (4) eingearbeitet ist,
- aus einem Antriebsmittel (10), durch das eine Betätigungskraft erzeugt ist, die von mindestens einem in dem Futterkörper (3) axial beweglich gelagerten Betätigungsbolzen (11) aufgenommen ist,
- aus einer in dem Futterkörper (3) eingearbeiteten Führungsbohrung (12), die in Richtung des freien Ende des zu bearbeitenden Werkstückes (4) geneigt ist und in die der Betätigungsbolzen (11) eingesetzt ist und
- aus mindestens drei Zentrierbacken (6), die in jeweils einer in dem Futterkörper (3) vorgesehenen Führungsnut (7) radial in Richtung des Werkstückes (4) beweglich gelagert sind und die trieblich mit jeweils einem der Betätigungsbolzen (11) zusammenwirken,
**dadurch gekennzeichnet,**
**dass** an dem Antriebsmittel (10) an dessen dem Betätigungsbolzen (11) zugewandten Ende ein Wälzlager (31), vorzugsweise in Form einer Rolle (32), oder ein Gleitlager vorgesehen ist, dass an dem freien Ende des Betätigungsbolzens (11) eine senkrecht zu der Längsachse (2) des Futterkörpers (3) verlaufende Anlagefläche (33) angearbeitet ist, dass die Anlagefläche (33) und die Rolle (32) bzw. das Gleitlager derart zusammenwirken, dass die Betätigungskräfte des Antriebsmittels (10) von der Rolle (32) bzw. dem Gleitlager auf die Anlagefläche (33) des Betätigungsbolzen (11) in axialer Richtung übertragen sind und dass gleichzeitig eine senkrecht zu der Längsachse (2) des Futterkörpers (3) ausgerichtete Relativbewegung zwischen der Anlagefläche (33) des Betätigungsbolzens (11) und der Rolle (32) des Wälzkörpers (31) bzw. dem Gleitlager freigegeben ist,
oder
**dass** an dem freien dem Antriebsmittel (10) zugewandten Ende des Betätigungsbolzen (11) ein Wälzlager (31), vorzugsweise in Form einer Rolle (32), oder ein Gleitlager, vorgesehen ist, dass an dem freien dem Betätigungsbolzens (11) zugewandten Ende des Antriebsmittels (10) eine Anlagefläche (33) angearbeitet ist, die senkrecht zu der Längsachse (2) des Futterkörpers (3) verläuft, dass die Anlagefläche (33) und die Rolle (32) des Wälzlagers (31) bzw. das Gleitlager derart zusammenwirken, dass die Betätigungskraft des Antriebsmittels (10) über dessen Anlagefläche (33) auf die an dem Betätigungsbolzen (11) angebrachte Rolle (32) des Wälzlagers (31) oder des Gleitlagers in axialer Richtung übertragen ist, dass gleichzeitig eine senkrecht zu der Längsachse (2) des Futterkörpers (3) ausgerichtete Relativbewegung zwischen der Anlagefläche (33) des Antriebsmittels (10) und der Rolle (32) des Wälzlagers (31) bzw. des Gleitlagers des Betätigungsbolzens (11) freigegeben ist, dass das Antriebsmittel (10) aus mindestens zwei teleskopartig ineinander gelagerten Zustellkolben (34) und Spannkolben (35) gebildet ist und dass der Spannkolben (35) relativ zu dem Zustellkolben (34) zur Erzeugung der Spannkraft axial bewegbar ist.

2. Kraftspannfutter nach Anspruch 1,
**dadurch gekennzeichnet,**
**dass** der axiale Hubweg des Zustellkolben (34) mittels eines an dem Futterkörper (3) angearbeiteten Anschlagsfläche (36) begrenzt ist.

3. Kraftspannfutter nach Anspruch 1 oder 2,
**dadurch gekennzeichnet,**
**dass** der Zustell- und Spannkolben (34, 35) pneumatisch oder hydraulisch betätigbar sind.

4. Kraftspannfutter nach Anspruch 1,
**dadurch gekennzeichnet,**
**dass** die dem Zustellkolben (34) zugewandte Oberfläche des Spannkolbens (35) in Form einer Polygonstruktur (35') ausgestaltet ist und/oder dass in die Oberfläche des Spannkolbens (35) eine oder mehrere Durchgangsöffnungen (40) eingearbeitet sind, die einen runden und/oder nierenförmig gekrümmten Durchtrittsquerschnitt aufweisen, in denen jeweils eine an der Anlagefläche (36) fixierte Führungsstange (41) angeordnet ist.

5. Kraftspannfutter nach einem der vorgenannten Ansprüche,
**dadurch gekennzeichnet,**
**dass** die jeweilige Zentrierbacke (6) an dem Betätigungsbolzen (11) in radialer Richtung relativ zu diesem verstellbar ist.

6. Kraftspannfutter nach einem der vorgenannten Ansprüche,
**dadurch gekennzeichnet,**
**dass** der axiale Verstellweg des Betätigungsbolzens (11) mittels eines Anschlages (21, 25) begrenzt ist.

7. Kraftspannfutter nach einem der vorgenannten Ansprüche,
**dadurch gekennzeichnet,**
**dass** zwischen dem Betätigungsbolzen (11) und der Führungsbohrung (12) eine Stabilisierungshülse (21) vorgesehen ist, und dass die Länge der Stabilisierungshülse (21) bezogen auf die Länge des Betätigungsbolzens (11) kleiner bemessen ist als dieser.

8. Kraftspannfutter nach einem der vorgenannten Ansprüche,
**dadurch gekennzeichnet,**
**dass** in dem Betätigungsbolzen (11) eine Bohrung (22) eingearbeitet ist, die senkrecht zu der Längsachse (13) des Betätigungsbolzens (11) verläuft, dass in die Bohrung (22) ein Raststift (24) und eine Schraubendruckfeder (26) eingesetzt ist, durch die der Raststift (24) in Richtung auf die innere Mantelfläche der Stabilisierungshülse (21) gedrückt ist, und dass in die innere Mantelfläche der Stabilisierungshülse (21) eine Kerbe (27) eingearbeitet ist, in die der Raststift (24) eingreift, derart, dass eine form- oder kraftschlüssige Wirkverbindung zwischen dem Betätigungsbolzen (11) und der Stabilisierungshülse (21) gebildet ist.

9. Kraftspannfutter nach Anspruch 7 oder 8,
**dadurch gekennzeichnet,**
**dass** in dem Futterkörper (3) eine Bohrung (23) eingearbeitet ist, die senkrecht zu der Längsachse (13) des Betätigungsbolzens (11) verläuft, dass in die Bohrung (23) ein Raststift (25) und eine Schraubendruckfeder (26) eingesetzt ist und dass in die äußere Mantelfläche der Stabilisierungshülse (21) eine Kerbe (28) eingearbeitet ist, in die der Raststift (25) eingreift, derart, dass eine form- oder kraftschlüssige Wirkverbindung zwischen der Stabilisierungshülse (21) und dem Futterkörper (3) gebildet ist.

10. Kraftspannfutter nach einem der vorgenannten Ansprüche,
**dadurch gekennzeichnet,**
**dass** in jede der Zentrierbacken (6) ein Langloch (14) eingearbeitet ist, das im montiertem Zustand senkrecht zu der Längsachse (2) des Futterkörpers (3) verläuft, dass die Zentrierbacke (6) mittels einer oder mehrerer Befestigungsschrauben (15) an dem Betätigungsbolzen (11) arretierbar sind und dass die Befestigungsschrauben (15) das Langloch (14) durchgreifen und die in eine in den Betätigungsbolzen (11) eingearbeiteten Gewindebohrung (16) abgestützt sind.

11. Kraftspannfutter nach Anspruch 10,
**dadurch gekennzeichnet,**
**dass** die Länge des Langlochs (14) der jeweiligen Zentrierbacke (6) zwischen 1/3 und 2/3 der Länge der Zentrierbacke (6) entspricht.

12. Kraftspannfutter nach einem der vorgenannten Ansprüche,
**dadurch gekennzeichnet,**
**dass** zwischen dem Kolben (10) und dem Betätigungsbolzen (11) ein Nutenstein (17) vorgesehen ist, dass in den Nutenstein (17) zwei zueinander beabstandet und parallel verlaufende Führungsöffnungen (18) eingearbeitet sind und dass an dem Kolben (10) und dem Betätigungsbolzen (11) angeformte Nasen (19) in die jeweilige Führungsöffnung (18) eingesetzt und in dieser verschiebbar gelagert sind.

13. Kraftspannfutter nach Anspruch 12,
**dadurch gekennzeichnet,**
**dass** die Rolle (32) an dem Nutenstein (17) zwischen den beiden Führungsöffnungen (18) angeordnet ist.

## Claims

1. A power collect chuck (1) for supporting cylindrically shaped workpieces (4) which are to be machined by means of a machine tool in the area of their free ends, consisting of:
- a chuck body (3) with a passage opening (5) worked into its lengthways axis (2) in order to accommodate the workpiece (4),
- a driving means (10) by means of which an actuation force is produced, which is absorbed by at least one actuating pin (11) in an axially movable mounting in the chuck body (3),
- a guide hole (12) worked into the chuck body (3), in which case the guide hole (12) is angled in the direction of the free end of the workpiece (4) to be machined and has the actuating pin (11) inserted in it and
- at least three centring jaws (6), each of which is mounted in a guide groove (7) provided in the chuck body (3), mounted so as to move radially in the direction of the workpiece (4), and each of which interacts in a driving arrangement with one of the actuating pins (11),
**characterised in that,**
an anti-friction bearing (31), preferably in the form of a roller (32) or a plain bearing is provided on the end of the driving means (10) facing the actuating pin (11), that a contact surface (33) is worked onto the free end of the actuating pin (11) running at right angles to the lengthways axis (2) of the chuck body (3), that the contact surface (33) and the roller (32) or the plain bearing interact in such a way that the actuation forces of the driving means (10) are transferred from the roller (32) or the plain bearing onto the contact surface (33) of the actuating pin (11) in an axial direction, and that simultaneously a relative movement vectored at right angles to the lengthways axis (2) of the chuck body (3) is released between the contact surface (33) of the actuating pin (11) and the roller (32) of the anti-friction bearing (31) or the plain bearing,
or
an anti-friction bearing (31), preferably in the form of a roller (32) or a plain bearing is provided on the free end of the actuating pin (11) facing the driving means (10), that a contact surface (33) is worked onto the free end of the driving means (10) facing the actuating pin (11) running at right angles to the lengthways axis (2) of the chuck body (3), that the contact surface (33) and the roller (32) of the anti-friction bearing (31) or the plain bearing interact in such a way that the actuation force of the driving means (10) is transferred via its contact surface (33) in an axial direction onto the roller (32) of the anti-friction bearing (31) or the plain bearing attached to the actuating pin (11), that simultaneously a relative movement vectored at right angles to the lengthways axis (2) of the chuck body (3) is released between the contact surface (33) of the driving means (10) and the roller (32) of the anti-friction bearing (31) or the plain bearing of the actuating pin (11), that the driving means (10) is formed by at least two advance pistons (34) and clamping pistons (35) mounted one inside another in a telescopic arrangement, and that the clamping piston (35) can be moved axially relative to the advance piston (34) in order to generate the clamping force.

2. The power collect chuck in accordance with Claim 1,
**characterised in that,**
the axial stroke movement of the advance piston (34) is limited by means of a stop surface (36) worked onto the chuck body (3).

3. The power collect chuck in accordance with Claim 1 or 2,
**characterised in that,**
the advance and clamping pistons (34, 35) can be actuated pneumatically or hydraulically.

4. The power collect chuck in accordance with Claim 1,
**characterised in that,**
the surface area of the clamping piston (35) facing the advance piston (34) is configured in the shape of a polygonal structure (35') and/or that one or more passage openings (40) with a round or kidney-shaped curved cross-section are worked into the surface of the clamping piston (35), in each of which a guide rod (41) fixed onto the contact surface (36) is arranged.

5. The power collect chuck in accordance with one of the aforementioned claims,
**characterised in that,**
the corresponding centring jaw (6) can be adjusted on the actuating pin (11) in a radial direction relative to the actuating pin (11).

6. The power collect chuck in accordance with one of the aforementioned claims,
**characterised in that,**
the axial adjustment travel of the actuating pin (11) is limited by means of a stop (21, 25).

7. The power collect chuck in accordance with one of the aforementioned claims,
**characterised in that,**
a stabilisation sleeve (21) is provided between the actuating pin (11) and the guide hole (12), and that the length of the stabilisation sleeve (21) is shorter than the length of the actuating pin (11).

8. The power collect chuck in accordance with one of the aforementioned claims,
**characterised in that,**
a hole (22) is worked into the actuating pin (11) and runs at right angles to the lengthways axis (13) of the actuating pin (11), that a detent pin (24) and a coil compression spring (26) are inserted into the hole (22), by means of which the detent pin (24) is pressed in the direction of the inner jacket surface of the stabilisation sleeve (21), and that a notch (27) is worked into the inner jacket surface of the stabilisation sleeve (21), into which the detent pin (24) engages in such a way that a positive or non-positive active connection is established between the actuating pin (11) and the stabilisation sleeve (21).

9. The power collect chuck in accordance with Claim 7 or 8,
**characterised in that,**
a hole (23) is worked into the chuck body (3) and runs at right angles to the lengthways axis (13) of the actuating pin (11), that a detent pin (25) and a coil compression spring (26) are inserted into the hole (23), and that a notch (28) is worked into the outer jacket surface of the stabilisation sleeve (21), into which the detent pin (25) engages in such a way that a positive or non-positive active connection is established between the stabilisation sleeve (21) and the chuck body (3).

10. The power collect chuck in accordance with one of the aforementioned claims,
**characterised in that,**
a slot (14) is worked into each of the centring jaws (6) which runs at right angles to the lengthways axis (2) of the chuck body (3) in the installed condition, that the centring jaws (6) can be locked onto the actuating pin (11) by means of one or more fastening screws (15) and that the fastening screws (15) pass through the slot (14) and are supported in a threaded hole (16) worked into the actuating pin (11).

11. The power collect chuck in accordance with Claim 10,
**characterised in that,**
the length of the slot (14) of the particular centring jaw (6) corresponds to between one third and two thirds of the length of the centring jaw (6).

12. The power collect chuck in accordance with one of the aforementioned claims,
**characterised in that,**
a sliding pad (17) is provided between the piston (10) and the actuating pin (11), that two guide openings (18) arranged at a distance from one another and running in parallel with one another are worked into the sliding pad (17) and that projections (19) formed onto the piston (10) and the actuating pin (11) are inserted into the corresponding guide opening (18), and are movably mounted in this.

13. The power collect chuck in accordance with Claim 12,
**characterised in that,**
the roller (32) is arranged on the sliding pad (17) between the two guide openings (18).

## Revendications

1. Mandrin de serrage motorisé (1) servant à l'appui de pièces à usiner cylindriques (4) prévues pour l'usinage aux extrémités libres à l'aide d'une machine-outil, comprenant
- un corps de mandrin (3) dans l'axe longitudinal duquel (2) il est pratiqué une ouverture de passage (5) recevant la pièce à usiner (4),
- un moyen d'entraînement (10) créant une force d'actionnement reçue par au moins un boulon d'actionnement (11) logé axialement de manière mobile dans le corps de mandrin (3),
- un alésage de guidage (12) pratiqué dans le corps de mandrin (3), incliné en direction de l'extrémité libre de la pièce à usiner (4) et dans lequel il est inséré le boulon d'actionnement (11) et
- au moins trois mors de centrage (6) logés de manière radialement mobile en direction de la pièce à usiner (4) dans respectivement une gorge de guidage (7) prévue dans corps de mandrin (3), et qui collaborent, par connexion entraînée, avec respectivement un des boulons d'actionnement (11),
**caractérisé en ce que**
sur l'extrémité du moyen d'entraînement (10) donnant sur le boulon d'actionnement (11), il est prévu un roulement à rouleau (31), de préférence sous la forme d'un galet (32) ou d'un palier lisse, que sur l'extrémité libre du boulon d'actionnement (11), il est prévu une face de portée (33) orientée perpendiculairement à l'axe longitudinal (2) du corps de mandrin (3), que la face de portée (33) et le galet (32) ou le palier lisse collaborent de sorte que les forces d'actionnement du moyen d'entraînement (10) sont transmises par le galet (32) ou par le palier lisse en direction axiale sur la face de portée (33) du boulon d'actionnement (11) et que simultanément, il est permis un mouvement relatif perpendiculaire à l'axe longitudinal (2) du corps de mandrin (3) entre la face de portée (33) du boulon d'actionnement (11) et le galet (32) du roulement à rouleau (31) ou le palier lisse,
ou
que sur l'extrémité libre du boulon d'actionnement (11) donnant sur le moyen d'entraînement (10), il est prévu un roulement à rouleau (31), de préférence sous la forme d'un galet (32) ou d'un palier lisse, que sur l'extrémité libre du moyen d'entraînement (10) donnant sur le boulon d'actionnement (11), il est prévu une face de portée (33) perpendiculaire à l'axe longitudinal (2) du corps de mandrin (3), que la face de portée (33) et le galet (32) du roulement à rouleau (31) ou le palier lisse collaborent de sorte que la force d'actionnement du moyen d'entraînement (10) est transmise par l'intermédiaire de la face de portée (33) en direction axiale sur le galet (32) du roulement à rouleau (31) ou du palier lisse montés sur le boulon d'actionnement (11), que simultanément, il est permis un mouvement relatif perpendiculaire à l'axe longitudinal (2) du corps de mandrin (3) entre la face de portée (33) du moyen d'entraînement (10) et le galet (32) du roulement à rouleau (31) ou le palier lisse du boulon d'actionnement (11), que le moyen d'entraînement (10) est formé par au moins deux pistons d'avance (34) et pistons de serrage (35) télescopiques logés l'un dans l'autre et que pour créer la force de serrage, le piston de serrage (35) est axialement déplaçable relativement au piston d'avance (34).

2. Mandrin de serrage motorisé d'après la revendication 1,
**caractérisé en ce que**
la course axiale du piston d'avance (34) est limitée à l'aide d'une face de butée (36) prévue sur le corps de mandrin (3).

3. Mandrin de serrage motorisé d'après les revendications 1 ou 2,
**caractérisé en ce que**
le piston d'avance et le piston de serrage (34, 35) sont actionnés de manière pneumatique ou hydraulique.

4. Mandrin de serrage motorisé d'après la revendication 1,
**caractérisé en ce que**
la forme de la surface du piston de serrage (35) donnant sur le piston d'avance (34) a une structure polygonale (35') et/ou que dans la surface du piston de serrage (35), il est pratiqué une ou plusieurs ouvertures de passage (40) à section transversale ronde et/ou réniforme dans lesquelles il est arrangé respectivement une tige de guidage (41) fixée à la face de butée (36).

5. Mandrin de serrage motorisé d'après une des revendications précédentes,
**caractérisé en ce que**
le mors de centrage respectif (6) sur le boulon d'actionnement (11) se laisse déplacer radialement et relativement à celui-ci.

6. Mandrin de serrage motorisé d'après une des revendications précédentes,
**caractérisé en ce que**
la course de réglage axiale du boulon d'actionnement (11) est limitée à l'aide d'une butée (21, 25).

7. Mandrin de serrage motorisé d'après une des revendications précédentes,
**caractérisé en ce que**,
entre le boulon d'actionnement (11) et l'alésage de guidage (12), il est prévu une douille stabilisatrice (21) et que référé à la longueur du boulon d'actionnement (11), la longueur de la douille stabilisatrice (21) est plus petite que celle-ci.

8. Mandrin de serrage motorisé d'après une des revendications précédentes,
**caractérisé en ce que**
dans le boulon d'actionnement (11), il est prévu un alésage (22) perpendiculaire à l'axe longitudinal (13) du boulon d'actionnement (11), que dans l'alésage (22), il est inséré un goujon de crantage (24) et un ressort hélicoïdal à pression (26) qui refoule le goujon de crantage (24) en direction de l'enveloppe intérieure de la douille stabilisatrice (21) et que dans l'enveloppe intérieure de la douille stabilisatrice (21), il est pratiqué une entaille (27) dans laquelle s'engrène le goujon de crantage (24) de sorte qu'il en résulte une liaison d'actionnement par la forme et la force entre le boulon d'actionnement (11) et la douille stabilisatrice (21).

9. Mandrin de serrage motorisé d'après les revendications 7 ou 8,
**caractérisé en ce que**
dans le corps de mandrin (3), il est prévu un alésage (23) perpendiculaire à l'axe longitudinal (13) du boulon d'actionnement (11),), que dans l'alésage (23), il est inséré un goujon de crantage (25) et un ressort hélicoïdal à pression (26) et que dans l'enveloppe extérieure de la douille stabilisatrice (21), il est pratiqué une entaille (28) dans laquelle s'engrène le goujon de crantage (25) de sorte qu'il en résulte une liaison d'actionnement par la forme et la force entre la douille stabilisatrice (21) et le corps de mandrin (3).

10. Mandrin de serrage motorisé d'après une des revendications précédentes,
**caractérisé en ce que**
dans chacun des mors de centrage (6), il est pratiqué un trou oblong (14) qui, en état monté, est perpendiculaire à l'axe longitudinal (2) du corps de mandrin (3), qu'à l'aide d'une ou de plusieurs vis de fixation (15), le mors de centrage (6) se laisse positionner sur le boulon d'actionnement (11), que les vis de serrage (15) passent à travers le trou oblong (14) et s'appuient dans un taraudage (16) pratiqué dans le boulon d'actionnement (11).

11. Mandrin de serrage motorisé d'après la revendication 10,
**caractérisé en ce que**
la longueur du trou oblong (14) du mors de centrage respectif (6) est de 1/3 à 2/3 de la longueur du mors de centrage (6).

12. Mandrin de serrage motorisé d'après une des revendications précédentes,
**caractérisé en ce que**,
entre le piston (10) et le boulon d'actionnement (11), il est prévu un coulisseau (17), que dans le coulisseau (17), il est pratiqué deux ouvertures de guidage (18) parallèles et espacées l'une de l'autre et que des nez (19) formés sur le piston (10) et le boulon d'actionnement (11) sont insérés dans l'ouverture de guidage respectif (18) et logés de manière glissante dans celle-ci.

13. Mandrin de serrage motorisé d'après la revendication 12,
**caractérisé en ce que**
sur le coulisseau (17), le galet (32) est disposé entre les deux ouvertures de guidage (18).
